# EUROPÄISCHE PATENTSCHRIFT

(11) **EP 2 895 985 B1**
(45) Veröffentlichungstag und Bekanntmachung des Hinweises auf die Patenterteilung: **07.06.2017**
(21) Anmeldenummer: 13762067.0
(22) Anmeldetag: 10.09.2013
(51) Int. Cl.: G06F 21/74, H04L 29/06

(54) **INHALTEVERWALTUNG FÜR MOBILSTATION MIT LAUFZEITUMGEBUNG**
CONTENT ADMINISTRATION FOR A MOBILE STATION WITH TRUSTED EXECUTION ENVIRONMENT
ADMINISTRATION DE CONTENU POUR UNE STATION MOBILE OBSERVENT LA TECHNOLOGIE D'EXECUTION FIABILISEE

(30) Priorität: 11.09.2012 DE 102012017915
(43) Veröffentlichungstag der Anmeldung: 22.07.2015
(73) Patentinhaber: Giesecke & Devrient GmbH, 81677 München (DE)
(72) Erfinder: DIETZE, Claus, 82395 Obersöchering (DE); GALKA, Gero, 83626 Valley (DE)
(86) Internationale Anmeldenummer: PCT/EP2013/002720
(87) Internationale Veröffentlichungsnummer: WO 2014/040724

(56) Entgegenhaltungen:
- EP-A1- 2 291 015
- EP-A2- 1 890 228
- WO-A2-2009/027743
- NN: "The Trusted Execution Environment, White Paper", GlobalPlatform inc. , 28. Februar 2011 (2011-02-28), XP002716538, Gefunden im Internet: URL:http://www.globalplatform.org/document s/GlobalPlatform_TEE_White_Paper_Feb2011.p df [gefunden am 2013-11-11]

## Beschreibung

Die Erfindung betrifft eine Mobilstation, umfassend ein mobiles Endgerät mit einer gesicherten Laufzeitumgebung und ein entfernbares oder festimplementiertes Sicherheitselement, einen Verwaltungsserver und ein Inhalteverwaltungs-System (Content Managment System) für die gesicherte Ausführungsumgebung.

Mobilstationen umfassen im GSM- und UMTS-System und ähnlichen Mobilfunksystemen ein mobiles Endgerät, z.B. Mobiltelefon oder Smartphone, und ein entfernbares oder festimplementiertes Sicherheitselement. Im Sicherheitselement sind Verbindungsdaten, z.B. IMSI (International Mobile Subscriber Identity), Schlüssel und Algorithmen zum Betreiben einer Verbindung im Mobilfunknetz implementiert. Im GSM- bzw. UMTS-System ist als entfernbares Sicherheitselement die SIM-Karte bzw. USIM-Karte bekannt (SIM = Subscriber Identity Module, USIM = Universal SIM). Als festimplementiertes Sicherheitselement ist die eUICC (embedded Universal Integrated Circuit Card) bekannt, die ein fest eingelötetes Bauelement ist. Die Kommunikation mit dem Sicherheitselement ist durch Normen der Organisation ETSI (European Telecommunications Standards Institute) standardisiert.

In mobilen Endgeräten sind gesicherte Laufzeitumgebungen TEEs (TEE = trusted execution environment) bekannt, bei denen auf Software-Ebene eine Trennung zwischen Ausführungsumgebungen unterschiedlicher Sicherheitsniveaus erzeugt wird. Sicherheitskritische Daten und Programme sind unter Verwaltung der gesicherten Laufzeitumgebung gespeichert. Die übrigen Daten und Programme sind in einer daneben existierenden normalen Laufzeitumgebung gespeichert. Die auch "Normal Zone" oder "Normal World" genannte unsichere Laufzeitumgebung ist durch ein Normalbetriebssystem (z.B. Android, Windows Phone, Symbian) gesteuert. Die auch "Trustzone" oder "Trusted World" oder "Secure World" oder "Trusted Execution Environment TEE" genannte gesicherte oder vertrauenswürdige Laufzeitumgebung ist durch ein Sicherheitsbetriebssystem gesteuert.

Insbesondere sicherheitskritische Applikationen und manche Peripherie-Funktionen (z.B. Tastaturtreiber) werden durch das Sicherheitsbetriebssystem auf sichere Weise gesteuert. Applikationen unter dem Sicherheitsbetriebssystem werden auch als Trusted Applications (z.B. Global Platform) oder teilweise als Trustlets (eingetragene Marke) bezeichnet, in assoziativer Anlehnung an die Begriffe "Trust" (Vertrauen) und "Applet".

So beschreibt z.B. das Dokument "Global Platform Device Technology: TEE System Architecture, Version 0.4, Public Review Draft October 2011, Document Reference: GPD_SPE_009" ein mobiles Endgerät mit einer normalen oder unsicheren Ausführungsumgebung "Rich Execution Environment (REE)" und einer sicheren Ausführungsumgebung "Trusted Execution Environment (TEE)" (vgl. Kapitel 1).

Mobilfunknetzbetreiber haben zur Verwaltung der Inhalte (sogenannte Contents; z.B. Daten, Programme) im Sicherheitselement eine ausgereifte Serverinfrastruktur. Diese ermöglicht es ihnen, Nachrichten nach ETSI-Standard, in denen die Inhalte enthalten sind, auf kryptographisch gesicherte Weise von einem Inhalteserver (Content Server) über das Mobilfunknetz (OTA, overthe-air) in das Sicherheitselement zu laden.

Zur Verwaltung der Inhalte in der gesicherten Laufzeitumgebung eines mobilen Endgeräts ist ebenfalls eine kryptographisch absicherbare Infrastruktur erforderlich. Herkömmlicherweise werden die Inhalte von gesicherten Laufzeitumgebungen, z.B. solchen nach Global Platform, durch einen sogenannten Trusted Service Manager verwaltet.

Durch die höheren Sicherheitsanforderungen der gesicherten Laufzeitumgebung im Vergleich zur normalen Laufzeitumgebung reicht die Infrastruktur zur Verwaltung der Inhalte eines herkömmlichen mobilen Endgeräts nicht aus. Die Serverinfrastruktur zur Inhalte-Verwaltung des Sicherheitselements ist nicht direkt zur Inhalte-Verwaltung der gesicherten Laufzeitumgebung geeignet. Denn die Kommunikation zwischen dem Sicherheitselement und einem Server erfolgt mittels Nachrichten gemäß ETSI Standard. Nachrichten an die gesicherte Laufzeitumgebung müssen anderen Vorgaben, z.B. denen der Global Platform Organisation genügen. Ein Trusted Service Manager ist in der Lage, solche Global Platform konforme Nachrichten auf sichere Weise an die gesicherte Laufzeitumgebung zu übermitteln. Der Betrieb einer zusätzlichen sicheren Serverinfrastruktur für die Verwaltung der Inhalte der gesicherten Laufzeitumgebung bedeutet für den Mobilfunknetzbetreiber einen großen organisatorischen und finanziellen Aufwand.

Der Erfindung liegt die Aufgabe zu Grunde, eine Mobilstation mit einer gesicherten Laufzeitumgebung bereitzustellen, die eine effiziente und zugleich sichere Verwaltung der Inhalte (Daten, Programme) der gesicherten Laufzeitumgebung ermöglicht. Zudem soll ein dazu passender Verwaltungsserver für Mobilstationen angegeben werden.

Aus EP 1510 012 B1 ist eine Mobilstation mit einem entfernbaren Sicherheitselement in Form einer SIM-Karte bekannt. In der SIM-Karte sind neben den herkömmlichen Verbindungsdaten (IMSI) zum Betreiben einer Verbindung im Mobilfunknetz zusätzlich auch Verbindungsdaten (IP-Adresse) zum Betreiben einer Verbindung in einem IP-Netz gespeichert. In der SIM-Karte ist zudem ein Server implementiert, der eine über das Mobilfunknetz bestehende Verbindung zu einer IP-Verbindung umleitet.

Das Dokument WO 2009/027743 A2 offenbart eine Mobilstation nach dem Oberbegriff von Anspruch 1. Genauer offenbart WO 2009/027743 A2 eine Mobilstation mit einer "less secure area", einer "trusted area" und einem im "less trusted area" eingerichteten "virtual UICC/IF". In der trusted area ist eine Sicherheitsbetriebssystem "Secure OS" eingerichtet, das mit dem im "less trusted area" eingerichtete "virtual UICC/IF" kommunizieren kann.

Sowohl WO2009/027743 A2, als auch das im Folgenden genannte Dokument EP 2 291 015 A1 lehren keine gesicherte Laufzeitumgebung und keine direkte Kommunikation zu einer solchen.

Das Dokument EP 2 291 015 A1 offenbart ein Verfahren zur Datenkommunikation zwischen einem Sicherheitselement und einem externen Sever über einen Netzwerk-Zugangspunkt.

Die Aufgabe wird gelöst durch eine Mobilstation nach Anspruch 1. Vorteilhafte Ausgestaltungen der Erfindung sind in den abhängigen Ansprüchen angegeben.

Die erfindungsgemäße Mobilstation umfasst ein Endgerät (z.B. Smartphone, Mobiltelefon oder dergleichen) mit einer gesicherten Laufzeitumgebung, sowie ein entfernbares oder festimplementiertes Sicherheitselement (z.B. SIM-Karte, UICC, eUICC etc.). Im Sicherheitselement ist eine Sicherheitselement-Empfangseinrichtung zum Empfangen von an das Sicherheitselement gesandten Sicherheitselement-Nachrichten eingerichtet. Sicherheitselement-Nachrichten sind dazu vorgesehen, Inhalte in das Sicherheitselement einzubringen, beispielsweise Daten, Programme oder Aktualisierungen für im Sicherheitselement bereits vorhandene Daten oder Programme, dabei insbesondere auch Daten und Programme betreffend die Subskription, d.h. das Vertragsverhältnis, um mit der Mobilstation Mobilfunkverbindungen über ein Mobilnetz eines Mobilnetzbetreibers zu betreiben. In der gesicherten Laufzeitumgebung ist eine Endgerät-Empfangseinrichtung zum Empfangen von an die gesicherte Laufzeitumgebung des Endgeräts gesandten Endgerät-Nachrichten eingerichtet. Endgerät-Nachrichten sind dazu vorgesehen, Inhalte wie Daten, Programme und Aktualisierungen zu Daten und Programmen in die gesicherte Laufzeitumgebung zu laden. Als Programme sind beispielsweise Anwendungen wie Zahlungsverkehrsapplikationen vorgesehen.

Die Mobilstation zeichnet sich aus durch einen im Sicherheitselement eingerichteten Endgerät-Sendeserver, der dazu eingerichtet ist, an die gesicherte Laufzeitumgebung Endgerät-Nachrichten zu senden, die von der gesicherten Laufzeitumgebung empfangen werden können.

Auf diese Weise können Inhalte für die gesicherte Laufzeitumgebung an das Sicherheitselement gesendet werden. Der im Sicherheitselement eingerichtete Endgerät-Sendeserver sendet die Inhalte an die gesicherte Laufzeitumgebung weiter. Folglich kann ein Netzbetreiber die Serverinfrastruktur verwenden, die zur Verwaltung des Sicherheitselements eingerichtet ist, um auch die gesicherte Laufzeitumgebung zu verwalten. Insbesondere kann zur Verwaltung der Inhalte der gesicherten Laufzeitumgebung ein Verwaltungsserver verwendet werden, der eigentlich zur Verwaltung der Inhalte des Sicherheitselements vorgesehen ist, und der hierzu nur geringfügig erweitert werden muss. Ein solcher Verwaltungsserver ist in Anspruch 3 angegeben. Die erforderliche Weiterleitung der Kommunikation an die gesicherte Laufzeitumgebung wird nicht durch einen externen Server des Netzbetreibers durchgeführt, sondern durch den im Sicherheitselement implementierten karteninteren (bzw. eUICC-internen etc.) Server. Der Netzbetreiber ist hierdurch entlastet. Da sowohl die Kommunikation zwischen dem externen (zB beim Netzbetreiber betriebenen) Server und dem Sicherheitselement als auch die Kommunikation zwischen dem Sicherheitselement und der gesicherten Laufzeitumgebung sicher sind, ist die erfindungsgemäße Lösung zudem ohne Sicherheitsverluste gegenüber einer Lösung mit einer gesonderten externen Serverinfrastruktur für die gesicherte Laufzeitumgebung.

Somit ist gemäß Anspruch 1 eine Mobilstation mit einer gesicherten Laufzeitumgebung geschaffen, die eine effiziente und zugleich sichere Verwaltung der Inhalte der gesicherten Laufzeitumgebung ermöglicht.

Als Endgerät-Sendeserver ist beispielsweise ein sogenannter Trusted Service Manager vorgesehen. Erfindungsgemäß ist der Trusted Service Manager für die gesicherte Laufzeitumgebung im Sicherheitselement (z.B. SIM-Karte, UICC, eUICC, etc.) implementiert.

Wahlweise sind das Sicherheitselement und die Sicherheitselement-Nachrichten gemäß ETSI spezifiziert und die gesicherte Laufzeitumgebung und die Endgerät-Nachrichten gemäß Global Platform spezifiziert.

Ein Verwaltungsserver ist zur Verwaltung der Inhalte von Mobilstationen eingerichtet. Die Mobilstation umfasst jeweils ein mobiles Endgerät mit einer gesicherten Laufzeitumgebung und ein entfernbares oder festimplementiertes Sicherheitselement. Der Verwaltungsserver umfasst einen herkömmlichen Sicherheitselement-Sendeserver, der dazu eingerichtet ist, an das Sicherheitselement Sicherheitselement-Nachrichten zu senden, die von dem Sicherheitselement empfangen und ausgewertet werden können. Der Verwaltungsserver zeichnet sich dadurch aus, dass er weiter dazu eingerichtet ist, Endgerät-Nachrichten, die von der gesicherten Laufzeitumgebung des Endgeräts empfangen werden können, entgegenzunehmen und an einen im Sicherheitselement eingerichteten Endgerät-Sendeserver weiterzuleiten. Die Kommunikation mit der gesicherten Laufzeitumgebung wird schließlich durch den im Sicherheitselement vorgesehenen und in Anspruch 1 angegebenen Endgerät-Sendeserver durchgeführt. Der Verwaltungsserver selbst muss dagegen nicht in der Lage sein, direkt mit der gesicherten Laufzeitumgebung zu kommunizieren. Folglich hat der Betreiber des Verwaltungsservers, z.B. ein Mobilfunk-Netzbetreiber, einen vergleichsweise geringen Aufwand.

Ein erfindungsgemäßes Inhalte-Verwaltungssystem umfasst mindestens eine Mobilstation sowie einen Verwaltungsserver wie oben beschrieben.

Das Inhalte-Verwaltungssystem umfasst wahlweise weiter einen Inhalteserver (Content Server), durch den Inhalte, insbesondere Daten oder/und Programme, zum Speichern in die gesicherte Laufzeitumgebung eines mobilen Endgeräts an den Sicherheitselement-Sendeserver bereitstellbar sind. Der Inhalteserver für Inhalte für die gesicherte Laufzeitumgebung kann wahlweise getrennt vorgesehen sein von einem Inhalteserver für Inhalte für das Sicherheitselement. Alternativ kann für Inhalte für Sicherheitselement und Laufzeitumgebung ein gemeinsamer/kombinierter Inhalteserver vorgesehen sein. Der Inhalteserver kann vom selben Betreiber betrieben werden wie der Verwaltungsserver oder alternativ von einem anderen Betreiber.

Ein erfindungsgemäßes Verfahren zum Speichern eines Inhalts, insbesondere von Daten oder/und eines Programms, in die gesicherte Laufzeitumgebung des mobilen Endgeräts zeichnet sich dadurch aus, dass
- der Inhalt von einem außerhalb der Mobilstation vorgesehenen Inhalteserver (Content Server) an einen außerhalb der Mobilstation vorgesehenen Sicherheitselement-Sendeserver bereitgestellt wird,
- der Inhalt in einer Sicherheitselement-Nachricht vom Sicherheitselement-Sendeserver an einen im Sicherheitselement eingerichteten Endgerät-Sendeserver gesendet wird und
- der Inhalt in einer Endgerät-Nachricht vom Endgerät-Sendeserver an die gesicherte Laufzeitumgebung gesendet wird.

Als Inhalte können insbesondere Daten oder/und Programmcode wie Treiber, Applikationen oder/und Aktualisierungen dafür vorgesehen sein.

Im Folgenden wird die Erfindung an Hand von Ausführungsbeispielen und unter Bezugnahme auf die Zeichnung näher erläutert, in der zeigen:
- Fig. 1: ein herkömmliches Laden von Inhalten in eine Mobilstation;
- Fig. 2: ein herkömmliches Laden von Inhalten in eine Mobilstation;
- Fig. 3: ein Laden von Inhalten in eine Mobilstation, gemäß einer Ausführungsform der Erfindung.

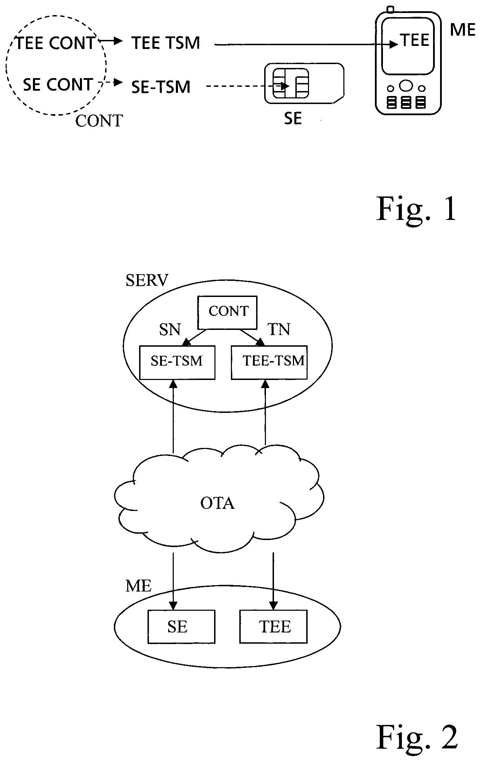

Fig. 1 und Fig. 2 zeigen das herkömmliche Laden von Inhalten in eine Mobilstation, die ein mobiles Endgerät ME mit einer gesicherten Laufzeitumgebung TEE und ein Sicherheitselement SE umfasst. Inhalte (Daten, Programmcode, Treiber, Applikationen, Aktualisierungen zu den genannten Inhalten etc.) CONT für die gesicherte Laufzeitumgebung TEE werden durch einen TEE Inhalte Server TEE CONT an einen Trusted Service Manager TEE TSM gemäß Global Platform bereitgestellt und durch den TEE TSM in die gesicherte Laufzeitumgebung TEE des Endgeräts ME geladen. Inhalte (Daten, Programmcode, Treiber, Applikationen, Aktualisierungen zu den genannten Inhalten etc.) CONT für das Sicherheitselement SE werden durch einen SE Inhalte Server SE CONT an einen Sicherheitselement Trusted Service Manager SE TSM (Sicherheitselement-Sendeserver) gemäß ETSI bereitgestellt und durch den SE TSM in das Sicherheitselement geladen. Wie in Fig. 2 gezeigt ist, werden die Inhalte für das Sicherheitselement SE in ETSI konformen Sicherheitselement-Nachrichten SN übermittelt. Inhalte für die gesicherte Laufzeitumgebung TEE werden in Global Platform konformen Endgerät-Nachrichten TN übermittelt. Der herkömmliche Sicherheitselement Trusted Service Manger SE TSM kann nur ETSI konforme Nachrichten verarbeiten. Der herkömmliche Trusted Service Manager für die gesicherte Laufzeitumgebung TEE TSM kann nur Nachrichten gemäß Global Platform verarbeiten.

Gemäß Fig. 1 und Fig. 2 werden somit herkömmlicherweise Inhalte für Endgerät ME und Sicherheitselement SE durch separate Server-Infrastrukturen bereitgestellt und geladen.

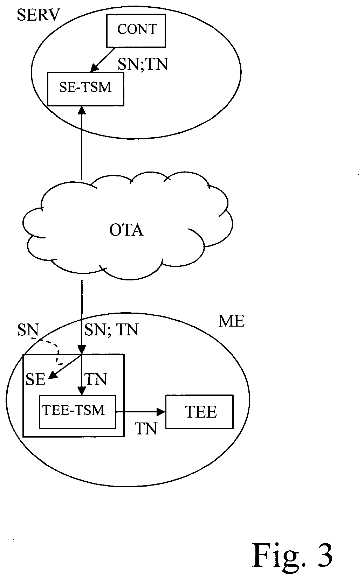

Fig. 3 zeigt ein Laden von Inhalten in eine Mobilstation, gemäß einer Ausführungsform der Erfindung. Inhalte für das Sicherheitselement SE werden wie in Fig. 1, 2 auf herkömmliche Weise in das Sicherheitselement SE geladen. Inhalte für die gesicherte Laufzeitumgebung TEE werden, in dieser Hinsicht wie herkömmlich, in Global Platform konformen Endgerät-Nachrichten TN gesendet. Im Unterschied zum Stand der Technik werden diese Endgerät-Nachrichten TE durch den Trusted Service Manager SE TSM, der für das Sicherheitselement SE vorgesehen ist, (Sicherheitselement-Sendeserver) an das Sicherheitselement SE gesendet. Der im Sicherheitselement SE implementierte TEE Trusted Service Manager TEE TSM, der für die gesicherte Laufzeitumgebung TEE vorgesehen ist, (Endgerät-Sendeserver) erkennt die Endgerät-Nachrichten TN als solche und leitet sie an die gesicherte Laufzeitumgebung TEE des Endgeräts ME weiter. Daher ist beim in Fig. 3 skizzierten System die Verwaltung der gesicherten Laufzeitumgebung TEE von einem herkömmlichen externen TEE TSM Server in das erweiterte Sicherheitselement SE verlagert. Im Sicherheitselement SE wird die Verwaltung des TEE genauer durch den kartenintern integrierten TEE TSM Server durchgeführt.

## Patentansprüche

1. Mobilstation, umfassend ein mobiles Endgerät (ME) mit einer gesicherten Laufzeitumgebung (TEE) und ein entfernbares oder festimplementiertes Sicherheitselement (SE),
wobei im Sicherheitselement (SE) eine Sicherheitselement-Empfangseinrichtung zum Empfangen von an das Sicherheitselement gesandten Sicherheitselement-Nachrichten (SN) eingerichtet ist,
und wobei in der gesicherten Laufzeitumgebung (TEE) des Endgeräts (ME) eine Endgerät-Empfangseinrichtung zum Empfangen von an die gesicherte Laufzeitumgebung (TEE) des Endgeräts (ME) gesandten Endgerät-Nachrichten (TN) eingerichtet ist,
weiter umfassend einen im Sicherheitselement (SE) eingerichteten Endgerät-Sendeserver (TEE-TSM), der dazu eingerichtet ist, an die gesicherte Laufzeitumgebung (TEE) Endgerät-Nachrichten (TN) zu senden, die von der gesicherten Laufzeitumgebung (TEE) empfangen werden können;
wobei
die an das Sicherheitselement gesandten Sicherheitselement-Nachrichten (SN) von einem externen Server gesandte Nachrichten sind.

2. Mobilstation nach Anspruch 1, wobei das Sicherheitselement (SE) und die Sicherheitselement-Nachrichten (SN) gemäß ETSI spezifiziert sind und die gesicherte Laufzeitumgebung (TEE) und die Endgerät-Nachrichten (TN) gemäß Global Platform spezifiziert sind.

3. Inhalte-Verwaltungssystem, umfassend mindestens eine Mobilstation nach Anspruch 1 oder 2 und einen Verwaltungsserver (SERV) für Mobilstationen, die jeweilige Mobilstation umfassend ein mobiles Endgerät (ME) mit einer gesicherten Laufzeitumgebung (TEE) und ein entfernbares oder festimplementiertes Sicherheitselement (SE),
wobei der Verwaltungsserver (SERV) einen Sicherheitselement-Sendeserver (SE-TSM) umfasst, der dazu eingerichtet ist, an das Sicherheitselement (SE) Sicherheitselement-Nachrichten (SN) zu senden, die von dem Sicherheitselement (SE) empfangen werden können,
wobei weiter der Verwaltungsserver (SERV) dazu eingerichtet ist, Endgeräte-Nachrichten (TE), die von der gesicherten Laufzeitumgebung (TEE) des Endgeräts (ME) empfangen werden können, entgegenzunehmen und an einen im Sicherheitselement (SE) eingerichteten Endgerät-Sendeserver (TEE-TSM) weiterzuleiten.

4. Inhalte-Verwaltungssystem nach Anspruch 3, weiter umfassend einen Inhalteserver (CONT), durch den Inhalte, insbesondere Daten oder/und Programme, zum Speichern in die gesicherte Laufzeitumgebung (TEE) eines mobilen Endgeräts (ME) an den Sicherheitselement-Sendeserver (SE-TSM) bereitstellbar sind.

5. Verfahren, für eine Mobilstation umfassend ein mobiles Endgerät (ME) mit einer gesicherten Laufzeitumgebung (TEE) und ein entfernbares oder festimplementiertes Sicherheitselement (SE), zum Speichern eines Inhalts, insbesondere von Daten oder/und eines Programms, in die gesicherte Laufzeitumgebung (TEE) des mobilen Endgeräts (ME),
- wobei der Inhalt in einer Endgerät-Nachricht (TN) von einem im Sicherheitselement (SE) eingerichteten Endgerät-Sendeserver (ME-TSM) an die gesicherte Laufzeitumgebung (TEE) gesendet wird,
wobei bei dem Verfahren
- der Inhalt von einem außerhalb der Mobilstation vorgesehenen Inhalteserver (CONT) an einen außerhalb der Mobilstation vorgesehenen Sicherheitselement-Sendeserver (SE-TSM) bereitgestellt wird,
- der Inhalt in einer Sicherheitselement-Nachricht (SN) vom Sicherheitselement-Sendeserver (SE-TSM) an den Endgerät-Sendeserver (ME-TSM) gesendet wird.

6. Verfahren nach Anspruch 5, wobei das Sicherheitselement (SE) und die Sicherheitselement-Nachrichten (SN) gemäß ETSI spezifiziert sind und die gesicherte Laufzeitumgebung (TEE) und die Endgerät-Nachrichten (TN) gemäß Global Platform spezifiziert sind.

## Claims

1. A mobile station comprising a mobile end device (ME) having a secured runtime environment (TEE) and a removable or firmly implemented security element (SE),
wherein in the security element (SE) there is arranged a security element receiving unit for receiving security element messages (SN) sent to the security element,
and wherein in the secured runtime environment (TEE) of the end device (ME) there is arranged an end device receiving unit for receiving end device messages (TN) sent to the secured runtime environment (TEE) of the end device (ME),
further comprising an end device send server (TEE-TSM) arranged in the security element (SE), which is arranged to send to the secured runtime environment (TEE) end device messages (TN) which can be received by the secured runtime environment (TEE);
wherein
the security element messages (SN) sent to the security element are messages sent by an external server.

2. The mobile station of claim 1, wherein the security element (SE) and the security element messages (SN) are specified according to ETSI and the secured runtime environment (TEE) and the end device messages (TN) are specified according to Global Platform.

3. A contents management system comprising at least one mobile station according to claim 1 or 2 and a management server (SERV) for mobile stations, the respective mobile station comprising a mobile end device (ME) having a secured runtime environment (TEE) and a removable or firmly implemented security element (SE),
wherein the management server (SERV) comprises a security element send server (SE-TSM) which is arranged to send to the security element (SE) security element messages (SN) which can be received by the security element (SE),
wherein further the management server (SERV) is arranged to accept end device messages (TE) which can be received by the secured runtime environment (TEE) of the end device (ME) and to pass them on to an end device send server (TEE-TSM) arranged in the security element (SE).

4. The contents management system of claim 3, further comprising a contents server (CONT) by which contents, in particular data or/and programs, for storage in the secured runtime environment (TEE) of a mobile end device (ME) can be supplied to the security element send server (SE-TSM).

5. A method for a mobile station comprising a mobile end device (ME) having a secured runtime environment (TEE) and a removable or firmly implemented security element (SE), for storing a content, in particular data or/and a program, in the secured runtime environment (TEE) of the mobile end device (ME),
- wherein the content is sent in an end device message (TN) from an end device send server (ME-TSM) arranged in the security element (SE) to the secured runtime environment (TEE),
wherein in the method
- the content from a contents server (CONT) provided outside the mobile station is supplied to a security element send server (SE-TSM) provided outside the mobile station,
- the content is sent in a security element message (SN) from the security element send server (SE-TSM) to an end device send server (ME-TSM).

6. The method of claim 5, wherein the security element (SE) and the security element messages (SN) are specified according to ETSI and the secured runtime environment (TEE) and the end device messages (TN) are specified according to Global Platform.

## Revendications

1. Station mobile comprenant un terminal (ME) mobile doté d'un environnement d'exécution (TEE) sécurisé et un élément de sécurité (SE) amovible ou implémenté à demeure,
cependant que, dans l'élément de sécurité (SE), un dispositif de réception d'élément de sécurité est conçu pour la réception de messages d'élément de sécurité (SN) envoyés à l'élément de sécurité,
et cependant que, dans l'environnement d'exécution (TEE) sécurisé du terminal (ME), un dispositif de réception de terminal est conçu pour la réception de messages de terminal (TN) envoyés à l'environnement d'exécution (TEE) sécurisé du terminal (ME),
comprenant en outre un serveur d'envoi de terminal (TEE-TSM) installé dans l'élément de sécurité (SE) et conçu pour envoyer à l'environnement d'exécution (TEE) sécurisé des messages de terminal (TN) pouvant être reçus par l'environnement d'exécution (TEE) sécurisé ;
cependant que
les messages d'élément de sécurité (SN) envoyés à l'élément de sécurité sont des messages envoyés par un serveur externe.

2. Station mobile selon la revendication 1, l'élément de sécurité (SE) et les messages d'élément de sécurité (SN) étant spécifiés conformément à ETSI, et l'environnement d'exécution (TEE) sécurisé et les messages de terminal (TN) étant spécifiés conformément à Global Platform.

3. Système de gestion de contenu, comprenant au moins une station mobile selon la revendication 1 ou 2 et une serveur de gestion (SERV) pour stations mobiles, la station mobile respective comprenant un terminal (ME) mobile doté d'un environnement d'exécution (TEE) sécurisé et un élément de sécurité (SE) amovible ou implémenté à demeure,
le serveur de gestion (SERV) comprenant un serveur d'envoi d'élément de sécurité (SE-TSM) qui est conçu pour envoyer à l'élément de sécurité (SE) des messages d'élément de sécurité (SN) qui peuvent être reçus par l'élément de sécurité (SE), cependant que, en outre, le serveur de gestion (SERV) est conçu pour réceptionner des messages de terminal (TE) pouvant être reçus par l'environnement d'exécution (TEE) sécurisé du terminal (ME) et pour les transférer à un serveur d'envoi de terminal (TEE-TSM) installé dans l'élément de sécurité (SE).

4. Système de gestion de contenus selon la revendication 3, comprenant en outre un serveur de contenu (CONT) par lequel des contenus, en particulier des données et/ou des programmes, peuvent être mis à disposition au serveur d'envoi d'élément de sécurité (SE-TSM) pour mémorisation dans l'environnement d'exécution (TEE) sécurisé d'un terminal (ME) mobile.

5. Procédé destiné à une station mobile, comprenant un terminal (ME) mobile doté d'un environnement d'exécution (TEE) sécurisé et un élément de sécurité (SE) amovible ou implémenté à demeure pour la mémorisation d'un contenu, en particulier de données et/ou d'un programme, dans l'environnement d'exécution (TEE) sécurisé du terminal (ME) mobile,
- cependant que le contenu est envoyé dans un message de terminal (TN) depuis un serveur d'envoi de terminal (ME-TSM) installé dans l'élément de sécurité (SE) à l'environnement d'exécution (TEE) sécurisé,
cependant que, dans le procédé,
- le contenu d'un serveur de contenu (CONT) prévu à l'extérieur de la station mobile est mis à disposition à un serveur d'envoi d'élément de sécurité (SE-TSM) prévu à l'extérieur de la station mobile,
- le contenu est envoyé dans un message d'élément de sécurité (SN) depuis le serveur d'envoi d'élément de sécurité (SE-TSM) au serveur d'envoi de terminal (ME-TSM).

6. Procédé selon la revendication 5, cependant que l'élément de sécurité (SE) et les messages d'élément de sécurité (SN) sont spécifiés conformément à ETSI, et l'environnement d'exécution (TEE) sécurisé et les messages de terminal (TN) sont spécifiés conformément à Global Platform.
